# EUROPEAN PATENT APPLICATION

(11) **EP 3 763 520 A1**
(43) Date of publication of application: **13.01.2021**
(21) Application number: 20187680.2
(22) Date of filing: 30.08.2013
(51) Int. Cl.: B32B 3/12, B32B 15/20, E04C 2/288, B32B 9/00, B32B 9/04, B32B 7/12

(54) **PANEL AND METHOD OF FORMING SAME**

(30) Priority: 05.09.2012 AU 2012903861
(62) Divisional of application: 13835032.7
(71) Applicant: Litestone Holdings Pty Ltd., Balwyn, Victoria 3103 (AU)
(72) Inventor: KYRIAKOULEAS, Louie, BALWYN, Victoria 3103 (AU)
(74) Representative: Lavoix

(57) **Abstract**

A panel including a surface sheet formed from a first material, and a body layer to which the surface sheet is adhered generally parallel to the body layer, wherein the body layer has a thickness greater than a thickness of the surface sheet, the body layer has a density less than a density of the surface sheet, and wherein the panel includes a side edge portion adhered along at least one edge of the panel.

## Description

### Field of the Invention

The invention relates to a panel and a method of forming a panel. More particularly, but not exclusively, the invention relates to a light weight panel intended as an alternative to a solid panel of quartz stone, marble or granite.

### Background of the invention

It is known to use solid panels of quartz stone, marble or granite for different purposes such as benchtops and cladding. Such panels are desirable due to their appearance and feel, but are very heavy in weight.

The applicant has identified that the heavy weight of such panels is the cause of many occupational health and safety (OHS) problems/claims, causing injury and even death. The applicant has also identified that the heavy weight of solid panels contributes significantly to the expense in importation, handling and installation of such panels.

Examples of the invention seek to provide an improved panel which overcomes or at least alleviates disadvantages associated with existing solid panels.

### Summary of the Invention

In accordance with one aspect of the present invention, there is provided a panel including a surface sheet formed from a first material, and a body layer to which the surface sheet is adhered generally parallel to the body layer, wherein the body layer has a thickness greater than a thickness of the surface sheet, the body layer has a density less than a density of the surface sheet, and wherein the panel includes a side edge portion adhered along at least one edge of the panel.

Preferably, the side edge portion is formed of the first material.

In a preferred form, the first material is quartz stone, marble or granite, and the panel is a lightweight replica of a solid panel formed of the first material.

Preferably, the surface sheet is formed by slicing the surface sheet from a block of said first material. More preferably, the surface sheet is formed by running the block through a multi-blade slicer to simultaneously divide the block into a plurality of like slices, each slice being suitable for use as a surface sheet for a panel.

Preferably, the body layer is formed such that a majority of the volume of the body layer is void space.

Preferably, the body layer is formed with a honeycomb structure. More preferably, tube elements of the honeycomb structure run generally transverse to a plane of the panel.

In one example, the body layer is formed from aluminium. Alternatively, the body layer may be formed of foam. The foam may be polystyrene material of a strength sufficient to resist being squashed under normal usage conditions of the panel. The foam may be fire-retardant foam.

Preferably, the surface sheet is adhered to one surface of the body layer, and a plate is adhered to an opposite surface of the body layer.

In a preferred form, the surface sheet is adhered to the body layer with glue, and the plate is adhered to the body layer with glue.

In one example, the side edge portion surrounds an entire edge perimeter of the panel.

In one form, the panel is rectangular, and the side edge portion surrounds all four edges of the panel.

Preferably, the side edge portion forms a mitre joint with the surface sheet.

In accordance with another aspect of the present invention, there is provided a method of forming a panel including the steps of:
slicing a block of a first material to form a slice of said first material;
using the slice as a surface sheet of the panel;
providing a body layer having a thickness greater than a thickness of the surface sheet, and a density less than a density of the surface sheet;
adhering the surface sheet to the body layer with the surface sheet and the body layer generally parallel; and
adhering a side edge portion along at least one edge of the panel.

### Brief Description of the Drawings

The invention is described, by way of non-limiting example only, with reference to the accompanying drawings, in which:
Figure 1 shows a first step in forming a panel in accordance with an example of the present invention;
Figure 2 shows a second step in forming the panel;
Figure 3 shows a third step in forming the panel;
Figure 4 shows a fourth step in forming the panel;
Figure 5 shows a fifth step in forming the panel; and
Figure 6 shows a completed panel.

### Detailed Description

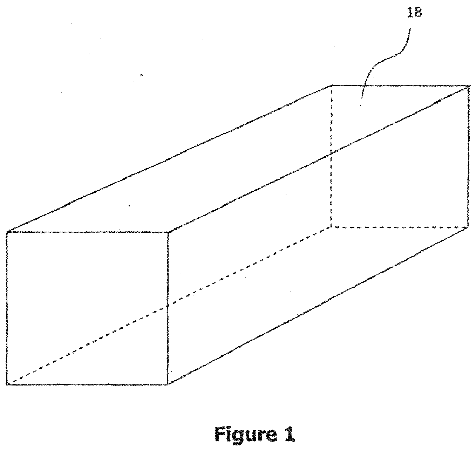

With reference to Figures 1 to 6, there is shown a panel 10 and a method of forming the panel 10. Advantageously, the panel 10 comprises a composite structure which enables the panel 10 to be formed with a much lighter weight than a comparable solid panel. Also, the composite panel maintains a high degree of strength while reducing cost significantly. The composite panel may be formed to look identical to a solid panel made of the same material (for example quartz stone, marble or granite) such that the difference in visual appearance is not detectable.

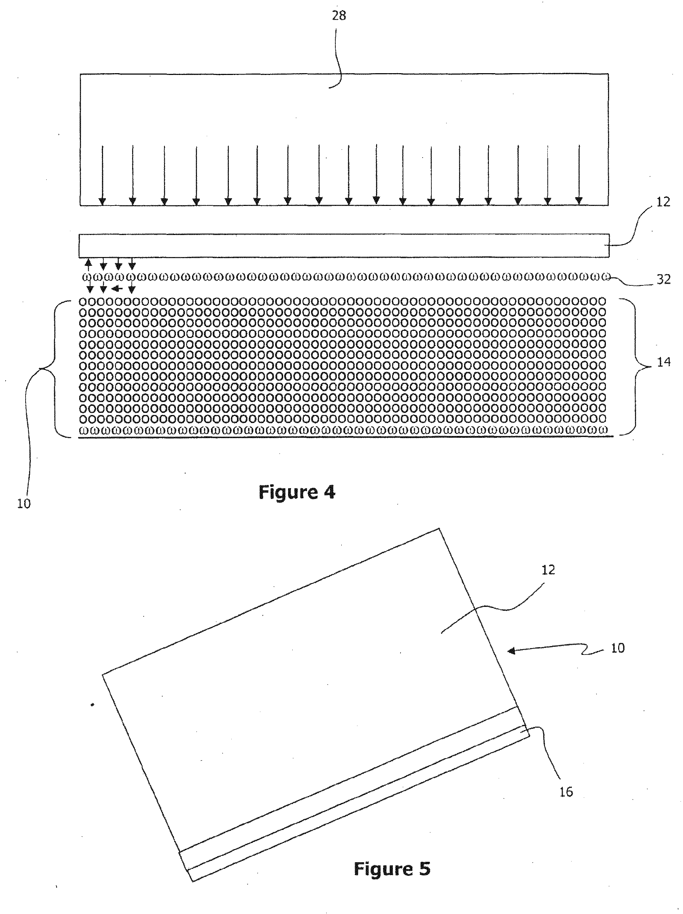

More specifically, the panel 10 includes a surface sheet 12 formed from a first material, and a body layer 14 to which the surface sheet 12 is adhered, with the surface sheet 12 generally parallel to the body layer 14. The body layer 14 has a thickness greater than a thickness of the surface sheet 12 (as depicted by the relative dimensions in Figure 4), and the body layer 14 has a density less than a density of the surface sheet 12. The panel 10 includes a side edge portion 16 adhered along at least one edge of the panel 10.

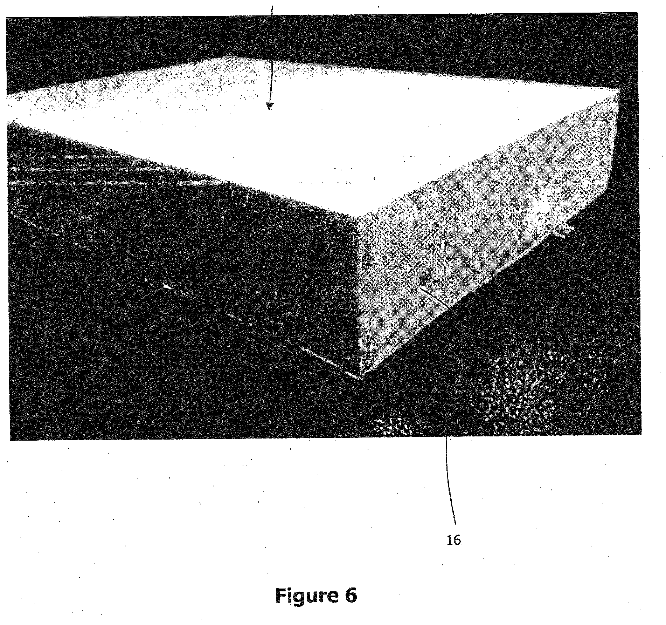

The body layer 14 may have a length and width slightly less than a length and width of the surface sheet 12 to accommodate the side edge portion 16 around the edges of the panel 10. Once the side edge portion 16 is adhered to the body layer 14, the finished panel 10 has an appearance identical to (or at least substantially similar to) a solid panel. For example, in the panel 10 shown in Figure 6, the first material is quartz stone, and both the surface sheet 12 and the side edge portion 16 are formed of this first material. The finished panel 10 looks identical to a solid quartz stone panel, but is significantly lighter, more cost effective, and safer to work with.

In alternative forms, the first material may be marble or granite, such that the panel 10 would form a lightweight replica of a solid panel formed from marble or granite respectively.

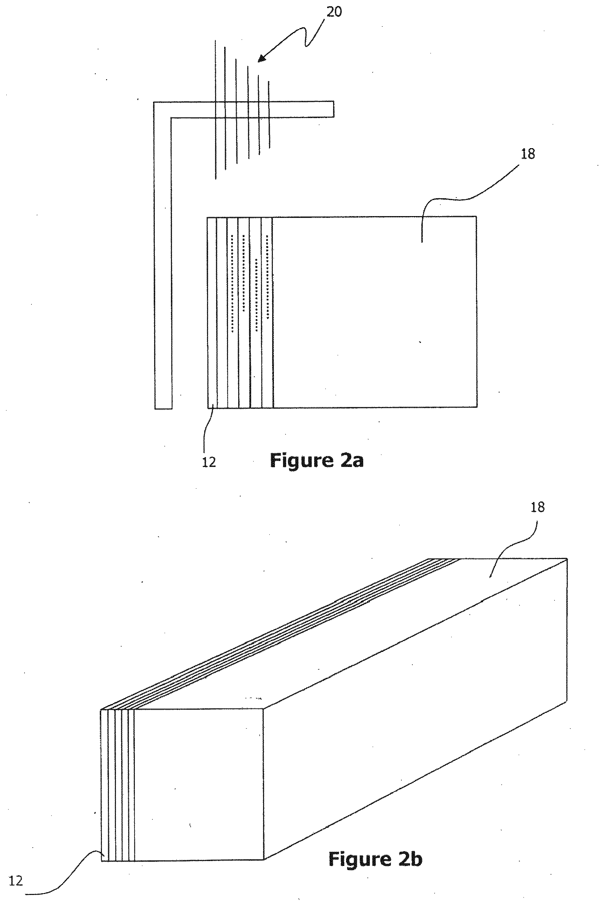

The surface sheet 12 is formed by slicing the surface sheet 12 from a block 18 of the first material. The block 18 is shown in Figure 1, the slicing operation is shown in Figure 2a, and the sliced block 18 is shown in Figure 2b. As shown in Figure 2a, the block 18 is passed relative to a multi-blade slicer to simultaneously divide the block 18 into a plurality of like slicers, each slice being suitable for use as a surface sheet 12 for a respective panel 10, such that a plurality of panels can be formed from the single block 18. The single block may have a weight in the order of 20 to 30 tonnes. The block 18 may be manufactured from reconstituted stone to form the quartz stone block, or in the case of marble or granite would be quarried. The block may be, for example, 1400mm in height, 1200mm in width and 3000mm in length, although these dimensions could be varied to suit according to the dimensions of the panels to be formed.

Figure 2a shows the multi-blade slicer 20 having six blades such that six slices are formed simultaneously from the block 18. The blades are spaced at a distance of 5mm such that each of the surface sheets 12 has a thickness of 5mm. Figure 2a shows the block 18 in end view being passed through relative to the multi-blade slicer 20, and Figure 2b shows a perspective view of the partially sliced block 18.

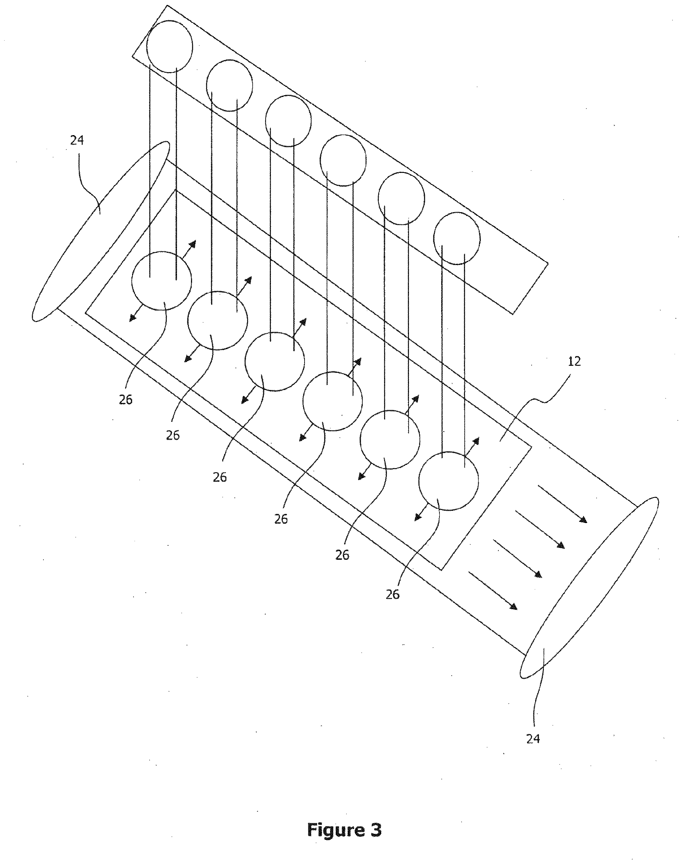

With reference to Figure 3, the 5mm thick surface sheet 12 is then polished using a multi-head automatic polishing line, on a conveyor belt system 22. The conveyor belt system 22 may have rollers 24, and the polishing heads 26 may have polishing pads which move at a 90 degree angle transverse to the direction of the conveyor belt system 22 as the surface sheet 12 is fed along the conveyor belt system 22.

With reference to Figure 4, pressure is applied evenly by way of a pressure application device 28 to compress together the different components of the panel 10. More specifically, the different components of the panel 10 include the surface sheet 12, the body layer 14, a plate 30, glue 32 applied between the body layer 14 and the surface sheet 12, and glue 34 applied between the body layer 14 and the plate 30. The body layer 14 may be formed such that a majority of the volume of the body layer 14 is void space. This may be achieved by forming the body layer 14 with a honeycomb structure. For strength purposes, tube elements of the honeycomb structure may be oriented to run generally transverse to a plane of the panel 10. In this way, where the panel 10 is to be used a benchtop, the tube elements of the honeycomb structure will run vertically such that the panel has a high degree of vertical strength. The body layer 14 may be formed of aluminium, however in alternative examples other materials may be used. As shown in Figure 4, the surface sheet 12 is adhered to one surface of the body layer 14, and the plate 30 is adhered to an opposite side of the body layer 14. The layers of glue 32, 34 may be in the form of epoxy adhesives. In an alternative example, the body layer 14 may be formed of foam, and the foam may be polystyrene material of a commercial strength sufficient to resist being squashed under normal usage conditions of the panel 10. The foam may be fire-retardant foam. It is envisaged that the usage of foam may be advantageous for cost reasons, for lightness and/or for country-specific requirements.

With reference to Figure 5, the side edge portion 16 is applied to the edge of the panel 10, and may be applied so as to surround an entire edge perimeter of the panel 10. In the example shown, the panel 10 is rectangular, and the side edge portion 16 surrounds all four edges of the panel 10. The side edge portion 16 and the surface sheet 12 are mitred at 45 degrees and are glued together so as to form a mitre joint. The side edge portion 16 may have a thickness of 5mm, and may be cut from one of the slices formed during the slicing step depicted in Figure 2a.

The plate 30 may be in the form of an aluminium plate. It will be understood that although specific materials are mentioned in the above detailed description, in alternative examples different materials may be used.

Advantageously, as the body layer has a thickness greater than a thickness of the surface sheet 12 and a density less than a density of the surface sheet 12, the finished panel 10 is lighter in weight than a solid panel made of the same material as the surface sheet 12. Also, as the body layer 14 is concealed by the surface sheet 12 and the side edge portion 16, the visual appearance of the panel 10 is the same as for a solid panel of the same material as the surface sheet 12. In some applications, the plate 30 will not be visible; in other examples where the base of the panel 10 will be visible, the bottom surface of the panel 10 may be covered with a surface sheet similar to surface sheet 12, such that the panel 10 has opposed surface sheets 12 formed of the first material. Accordingly, with opposed surface sheets 12 together with a side edge portion 16 extending around the total perimeter of the panel 10, the body layer 14 may be completely concealed from external view during normal use of the panel 10.

While various embodiments of the present invention have been described above, it should be understood that they have been presented by way of example only, and not by way of limitation. It will be apparent to a person skilled in the relevant art that various changes in form and detail can be made therein without departing from the spirit and scope of the invention. Thus, the present invention should not be limited by any of the above described exemplary embodiments.

The reference in this specification to any prior publication (or information derived from it), or to any matter which is known, is not, and should not be taken as an acknowledgment or admission or any form of suggestion that that prior publication (or information derived from it) or known matter forms part of the common general knowledge in the field of endeavour to which this specification relates.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

## Claims

1. A panel including a surface sheet formed from a first material, and a body layer to which the surface sheet is adhered generally parallel to the body layer, wherein the body layer has a thickness greater than a thickness of the surface sheet, the body layer has a density less than a density of the surface sheet, and wherein the panel includes a side edge portion formed of said first material adhered along at least one edge of the panel to conceal the body layer from view such that the panel resembles a solid panel formed of said first material.

2. A panel as claimed in claim 1, wherein the first material is quartz stone, marble or granite, and the panel is a lightweight replica of a solid panel formed of the first material.

3. A panel as claimed in claim 1 or claim 2, wherein the surface sheet is formed by slicing the surface sheet from a block of said first material.

4. A panel as claimed in claim 3, wherein the surface sheet is formed by running the block through a multi-blade slicer to simultaneously divide the block into a plurality of like slices, each slice being suitable for use as a surface sheet for a panel.

5. A panel as claimed in any one of claims 1 to 4, wherein the body layer is formed such that a majority of the volume of the body layer is void space.

6. A panel as claimed in any one of claims 1 to 5, wherein the body layer is formed with a honeycomb structure.

7. A panel as claimed in claim 6, wherein tube elements of the honeycomb structure run generally transverse to a plane of the panel.

8. A panel as claimed in any one of claims 1 to 7, wherein the body layer is formed from aluminium.

9. A panel as claimed in any one of claims 1 to 7, wherein the body layer is formed from foam material.

10. A panel as claimed in any one of claims 1 to 9, wherein the surface sheet is adhered to one surface of the body layer, and a plate is adhered to an opposite surface of the body layer.

11. A panel as claimed in any one of claims 1 to 10, wherein the surface sheet is adhered to the body layer with glue, and the plate is adhered to the body layer with glue.

12. A panel as claimed in any one of claims 1 to 11, wherein the side edge portion surrounds an entire edge perimeter of the panel.

13. A panel as claimed in any one of claims 1 to 12, wherein the panel is rectangular, and the side edge portion surrounds all four edges of the panel.

14. A panel as claimed in any one of claims 1 to 13, wherein the side edge portion forms a mitre joint with the surface sheet.

15. A method of forming a panel including the steps of:
slicing a block of a first material to form a slice of said first material;
using the slice as a surface sheet of the panel;
providing a body layer having a thickness greater than a thickness of the surface sheet, and a density less than a density of the surface sheet;
adhering the surface sheet to the body layer with the surface sheet and the body layer generally parallel; and
adhering a side edge portion formed of said first material along at least one edge of the panel.
